# EUROPÄISCHE PATENTSCHRIFT

(11) **EP 1 146 276 B1**
(45) Veröffentlichungstag und Bekanntmachung des Hinweises auf die Patenterteilung: **28.07.2004**
(21) Anmeldenummer: 01104835.2
(22) Anmeldetag: 28.02.2001
(51) Int. Cl.: F16L 55/033

(54) **Vorrichtung zur Befestigung von Rohren**
Device for the fastening of pipes
Dispositif de fixation de tuyauterie

(30) Priorität: 10.04.2000 DE 10014050
(43) Veröffentlichungstag der Anmeldung: 17.10.2001
(73) Patentinhaber: REHAU AG + Co, 95111 Rehau (DE)
(72) Erfinder: Heinrich, Gerhard, 95111 Rehau (DE)

(56) Entgegenhaltungen:
- EP-A- 0 857 907
- DE-A- 4 228 961
- DE-A- 19 642 603
- DE-U- 29 800 887
- US-A- 5 647 564

## Beschreibung

Die Erfindung betrifft eine Vorrichtung zur Befestigung von Rohren mit wenigstens einer das Rohr fest umspannenden Fixierschelle und einer das Rohr mit einer vorgegebenen Toleranz umgebenden Stützschelle, welche an einer Wand, einem Pfeiler etc. befestigt ist und mit ihrer einen als Stützfläche ausgebildeten Stirnseite gegen eine axial gegenüberliegende, als Tragfläche ausgebildeten Stirnseite der Fixierschelle anliegt und dadurch über die Fixierschelle das Rohr trägt, wobei das Material wenigstens im Bereich der Stütz- und/oder der Tragfläche schalldämmende Eigenschaften aufweist und gummielastisch ist und wobei die Fixierschelle und/oder Stützschelle jeweils aus einem steifen Schellenelement mit einem Elastomerelement besteht.

In der EP-A1-0 857 907 ist eine gattungsgemäße Vorrichtung zur Befestigung offenbart.

Um eine Körperschallentkopplung zwischen dem Rohr und einer Befestigungsfläche zu erreichen, ist es bekannt, das Rohr in bestimmten Abständen mit einer fest umspannenden Fixierschelle zu umgeben, die durch eine wandseitig befestigte Stützschelle getragen wird, wobei zwischen Stütz- und Fixierschelle ein schalldämmendes Material angeordnet ist. Die Stützschelle hat dabei einen Innendurchmesser, der größer ist als der Außendurchmesser des Rohres, so dass Rohr und Stützschelle nicht miteinander in Kontakt stehen. Diese Rohrbefestigung wird insbesondere bei der Verlegung von Abwasserrohren an Hausmauern, Wänden etc. verwendet. Bei einfachen Fixierschellen ohne schalldämmende Materialauskleidung werden Geräusche, die beim Durchfließen der Abwasserrohre entstehen, über die starre Verbindung an die Mauer, Wand etc. weitergeleitet. Diese Geräusche sind oft störend im gesamten Gebäude wahrzunehmen. Aus diesem Grunde werden zumindest im Bereich der Tragflächen die Stütz- und Fixierschellen mit einem schalldämmenden Material versehen.

Eine derartige Rohrbefestigung ist aus der DE 42 28 961 C2 bekannt. Hier wird eine Rohrbefestigung mit einer Fixier- und einer Stützschelle beschrieben, wobei Fixier- und/oder Stützschelle jeweils aus einem steifen Schellenelement und einem Elastomerelement, welches an der Stirnseite des benachbarten Schellenelementes anliegt, bestehen.

Durch die Aufteilung der Schellen in zwei getrennte Elemente mit verschiedenen Materialeigenschaften kann zum einen die notwendige Festigkeit der beiden Schellen erreicht und zum anderen gleichzeitig die zwischen den beiden Schellen benötigte schalldämmende Eigenschaft gewährleistet werden.

Die Innenseite zumindest eines der steifen Schellenelemente liegt vollständig am zugeordneten Elastomerelement an, wodurch das steife Schellenelement keinen direkten Kontakt zum Rohr hat. Das durch die Fixierschelle zusammengepresste Elastomerelement reduziert teilweise die Schallübertragung. Im Falle der Stützschelle, die das Rohr mit einer vorgegebenen Toleranz umgibt, verhindert das an der Innenseite angebrachte Elastomerelement bei einer radialen Verschiebung der Stützschelle den direkten Kontakt des steifen Schellenelements mit dem Rohr. Weitere Ausführungen beschreiben die Ausbildung der Elastomerelemente, beispielsweise die genoppten oder gerippten Innenflächen oder die Verwendung von Federelementen als körperschallentkoppelnde Elemente. Die Elastomerelemente können teilweise aus Gummi bestehen und teilweise als Federelemente ausgebildet sein. Die Nachteile dieser Lösung bestehen darin, dass die Elastomerelemente für die Stütz- und die Fixierschelle unterschiedlich ausgebildet sind, so dass bei fehlerhaftem Einbau eine Schalldämmung nicht oder nur in geringem Maße gewährleistet ist. Bei ungenauem Einbau bzw. wenn die Rohre durch ungleiche Belastung radial verschoben werden, kann es zum Anliegen der Rohrwandung an die Stützschelle bzw. an das Elastomerelement kommen, wodurch eine einwandfreie Schalldämmung nicht gewährleistet ist.

Die weiteren Ausführungen, wie die Aufteilung der Elastomerelemente in einen die Stütz- bzw. die Tragfläche bildenden Teil bzw. wenn die Elastomerelemente teilweise aus Gummi und teilweise als Federelemente ausgebildet sind, sind relativ kompliziert in ihrer Ausbildung aufgebaut und führen nicht zu einer kostengünstigen Herstellung.

Die Schrift DE 196 42 603 A1 beschreibt eine Fallrohrstütze, die körperschallisolierend ausgeführt ist und eine becherartig konische Außenschale und eine dazu formkomplementäre Innenschale aufweist, wobei zwischen der Innen- und Außenschale ein Elastomerelement eingebracht ist. Aus der Druckschrift US 5,647,564 ist ein Methode zur schnellen Befestigung von Rohren an Wänden bekannt, die energie- und schallabsorbierend ausgeführt ist.

In der DE 298 00 887 U1 wird eine schalldämmende Rohrschelle beschrieben, wobei ein metallischer Doppelkäfig mit einer nach innen abgesetzten Zwischenbrücke zum Einsatz kommt. Aus der DE 42 28 961 A1 ist eine Rohrbefestigungsvorrichtung mit einer Fixier- und einer Stützschelle bekannt und ein gummielastisches Material trägt zur Schalldämmung im Bereich der Stütz- bzw. Tragfläche bei.

Aufgabe der Erfindung ist es, die Nachteile des bekannten Standes der Technik zu verbessern und eine Vorrichtung zur Befestigung von Rohren anzugeben, die in jedem Fall eine konzentrische Anbringung der Stützschelle gegenüber der Fixierschelle erlaubt und somit eine einwandfreie und sichere Schalldämmung gewährleistet, die kostengünstig herstellbar, verwechslungsfrei montierbar und auch als Einzelbefestigung verwendbar ist.

Die Aufgabe ist erfindungsgemäß gelöst durch eine Vorrichtung mit den im Anspruch 1 angegebenen Merkmalen.

Dabei wurde erkannt, dass das Elastomerelement zur Verwendung sowohl in der Stützstelle als auch in der Fixierschelle derart ausgebildet ist, dass im montierten Zustand die Fixierschelle selbstzentrierend an der Stützschelle anliegt. Die Stütz- und die Fixierschelle weisen im unmontierten Zustand den gleichen Innendurchmesser auf. Die Stützstelle und/oder die Tragfläche des einen Elastomerelements ist in einem Winkel, vorzugsweise in einem spitzen Winkel, zur Wand des Rohres ausgebildet, wobei die Tragfläche des anderen Elastomerelements einen halbkreisförmigen Querschnitt aufweist und die Berührung zwischen dem Elastomerelement der Fixierschelle und dem Elastomerelement der Stützschelle annähernd eine Linienberührung ist, wodurch die Übertragungsfläche für die Schwingungen sehr klein gehalten wird.

Ein weiterer Vorteil der Erfindung besteht darin, dass die geometrische Ausführung der Elastomerelemente gleich ist, so dass sich Kostenvorteile in der Herstellung, Beschaffung und Lagerhaltung ergeben.

Der Toleranzspalt, d.h. der Abstand zwischen dem Rohr und dem Elastomerelement wird nach dem Einsetzen des Rohres mit der montierten Fixierschelle mittels einer Schraube an der Stützschelle eingestellt. Um einen vorgegebenen Toleranzspalt einzuhalten, ist es vorteilhaft, ein Distanzstück in die Öffnung der Stützstelle einzusetzen.

Die Elastomerelemente weisen auf der dem Rohr zugewandten Seite mindestens eine Rille auf. Dadurch wir die Kontaktfläche zwischen dem Elastomerelement und dem Rohr minimiert.

Die Erfindung lehrt weiter, dass die Elastomerelemente bei bestimmten Anforderungen auf der dem Rohr zugewandten Seite auch glattflächig ausgebildet sein können. Hierdurch kann bei bestimmten Einbausituationen beispielsweise eine Verringerung der Schellengröße realisiert werden.

Das Elastomerelement ist dazu so ausgebildet, dass es im Bereich der Stützund/oder Tragfläche wenigstens einen Hohlraum aufweist. Somit kann neben der Materialeinsparung bezüglich des Elastomerelements eine verbesserte Auflage zwischen der Stütz- und der Fixierschelle erreicht werden.

Die steifen Schellenelemente der erfindungsgemäßen Vorrichtung sind halbkreisförmig dimensioniert und an ihren Verbindungsstellen beweglich untereinander verbunden, so dass eine zeitsparende Montage der Stützschellen bzw. der Fixierschellen möglich ist. Dies kann vorzugsweise durch ein Scharnier realisiert werden.

Durch die selbstzentrierende Anordnung von Stütz- und Fixierschelle mit ihren Elastomerelementen nach Anspruch 2 kann selbst unter ungünstigen Bedingungen ein Kontakt des Elastomerelements der Stützschelle mit dem Rohr vermieden werden. Dabei wird die Selbstzentrierung zwischen Stütz- und Fixierschelle durch eine abgeschrägte Stützfläche und der einen halbkreisförmigen Querschnitt aufweisenden Tragfläche des Elastomerelements erreicht.

Gemäß Anspruch 3 kommt vorteilhaft nur eine Teilfläche des Elastomerelementes an der Wandung des Rohres zum Anliegen.

Durch die selbstzentrierende Anordnung wird auch erreicht, dass besonders im Hinblick auf maximale Körperschallentkopplung eine gleichmäßige Lastverteilung auf die Stützfläche erfolgt. Dadurch ergibt sich eine optimale Schalldämmung der Geräusche vom Rohr zur Befestigungswand gemäß Anspruch 4.

Die Erfindung wird anhand eines Ausführungsbeispiels näher erläutert. Es zeigen:
Figur 1 - Vorrichtung zur Befestigung eines Abwasserrohres gemäß der Erfindung.
Figur 2: Querschnitt durch eine Stützschelle mit einem Elastomerelement.

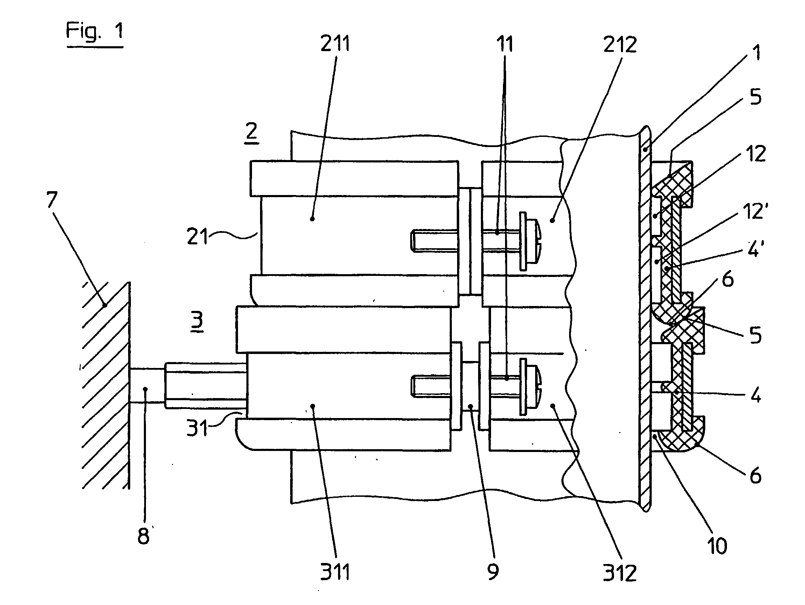

Die Figur 1 zeigt ein Rohr (1), das über die erfindungsgemäße Vorrichtung mittels einem Befestigungselement (8) an der Wand (7) fixiert ist. Zum besseren Verständnis ist die Vorrichtung teilweise geschnitten dargestellt.

Die Vorrichtung besteht aus einer Fixierschelle (2) und einer Stützschelle (3), die baugleich mit Verschraubungen (11) und Elastomerelementen (4, 4'), die von den Schellenelementen (21, 31) umfasst werden, ausgeführt ist. Die Schellenelemente (21, 31) sind in diesem Ausführungsbeispiel als halbkreisförmige Elemente (211, 212, 311, 312) ausgeführt. Sowohl das Elastomerelement (4) für die Stützschelle (3) als auch das Elastomerelement (4') für die Fixierschelle (2) weisen die gleiche geometrische Ausbildung auf.

Das Elastomerelement (4') wird mittels der Fixierschelle (2) über eine Schraube (11) so fest mit dem Rohr (1) verspannt, dass aufgrund der Reibung zwischen dem Rohr (1) und dem Elastomerelement (4') keine Axialbewegung mehr möglich ist. Das Elastomerelement (4') der Fixierschelle (2) weist auf seiner dem Rohr (1) zugewandten Seite zwei Rillen (12, 12') auf, so dass nicht die gesamte Innenfläche des Elastomerelementes (4') an der Wandung des Rohres (1) anliegt. Die Stützschelle (3) ist über ein Befestigungselement (8) an einer Wand (7) befestigt und weist ebenfalls ein Elastomerelement (4) auf.

Nach dem Einsetzen des Rohres (1) mit der fest montierten Fixierschelle (2) wird der Toleranzspalt (10) zwischen Rohr (1) und dem Elastomerelement (4) der Stützschelle (3) mittels der Schraube (11) eingestellt. Dadurch wird das Rohr (1) mit der fest montierten Fixierschelle (2) automatisch in bezug zur Stützschelle (3) zentriert. Die Selbstzentrierung zwischen Stützschelle (3) und Fixierschelle (2) wird durch das Zusammenwirken der abgeschrägten Stützfläche (5) und der einen halbkreisförmigen Querschnitt aufweisenden Tragfläche (6) der Elastomerelemente (4, 4') erreicht.

Durch die Ausbildung der Elastomerelemente (4, 4') mit einer abgeschrägten Stützfläche (5) und einer einen halbkreisförmigen Querschnitt aufweisenden Tragfläche (6) kommt es beim Zusammenbau annähernd zu einer Linienberührung. Dadurch ergeben sich relativ kleine Kontaktflächen, was wiederum die schalldämmenden Eigenschaften der erfindungsgemäßen Vorrichtung deutlich verbessert.

Um einen fest vorbestimmten Toleranzspalt (10) einstellen zu können, ist es vorteilhaft, ein Distanzstück (9) einzusetzen.

Durch das Aufliegen der fest mit dem Rohr (1) montierten Fixierschelle (2) auf der an der Wand (7) befestigten Stützschelle (3) ist das Rohr (1) bezüglich einer axialen Bewegung gesichert.

Durch die selbstzentrierende Ausbildung von Stützschelle (3) und Fixierschelle (2) mit ihren Elastomerelementen (4, 4') ist das Rohr (1) bezüglich einer radialen Bewegung gesichert.

Die im Rohr (1) erzeugten Geräusche werden über die am Rohr (1) anliegenden Bereiche in das Elastomerelement (4') eingeleitet. Da im Bereich der Fixierschelle (2) das Elastomerelement (4') komprimiert ist, werden die eingeleiteten Schwingungen gedämpft. Die eingeleiteten verminderten Schwingungen pflanzen sich zur Übergangsstelle zwischen der Stützfläche (5) des Elastomerelementes (4') der Fixierschelle (2) und der Tragfläche (6) des Elastomerelementes (4) der Stützschelle (3) fort.

Das untere Elastomerelement (4) in der Stützschelle (3) ist im wesentlichen unkomprimiert und weist dadurch gute schalldämmende Eigenschaften auf. Das gleiche trifft auch für den Bereich der Tragfläche (6) des Elastomerelements (4') der Fixierschelle (2) zu.

Die in das Elastomerelement (4') der Fixierschelle (2) eingeleiteten Schwingungen werden nur zum Teil über die Übergangsstelle zwischen Tragfläche (6) und Stützfläche (5) in das Elastomerelement (4') der Stützschelle (3) weitergeführt, wo sie dann absorbiert werden.

Durch die selbstzentrierende Ausführung mit der Folge einer gleichmäßigen Lastverteilung und die annähernd durch Linienberührung zwischen Stützfläche (5) des Elastomerelementes (4') der Fixierschelle (2) und Tragfläche (6) des Elastomerelementes (4) der Stützschelle (3) ausgebildete geringe Übertragsfläche wird eine optimale Schalldämmung zwischen Rohr (1) und Wand (7) erreicht.

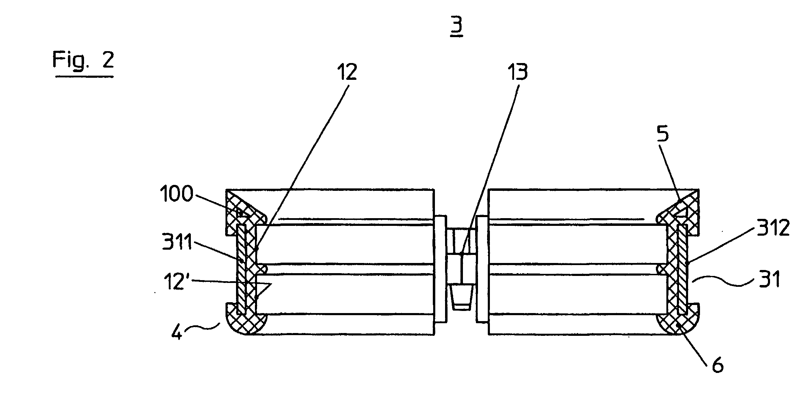

Die Figur 2 zeigt einen Schnitt durch eine Stützschelle (3), bestehend aus einem Elastomerelement (4) und einem steifen Schellenelement (31).

Das Elastomerelement (4) weist an seinem oberen Teil eine von außen nach innen verlaufende abgeschrägte Stützfläche (5) und an seinem unteren Teil eine einen halbkreisförmigen Querschnitt aufweisende Tragfläche (6) auf.

Im Bereich der Stützfläche (5) weist das Elastomerelement (4) einen Hohlraum (100) auf. Die der Wandung des Rohres (1) zugewandten Seite weist zwei Rillenbereiche (12, 12') auf.

Dadurch wird die Schalleinleitungsfläche gegenüber einer glattflächigen Ausbildung der dem Rohr (1) zugewandten Seite des Elastomerelementes (4, 4') deutlich verringert, was zu einer Verbesserung der Schalldämmung führt.

Das steife Schellenelement (31) der Stützschelle (3) ist in dieser Ausführung aus zwei durch ein Scharnier (13) beweglich miteinander verbundenen halbkreisförmigen Schellenelementen (311, 312) aufgebaut.

## Patentansprüche

1. Vorrichtung zur Befestigung von Rohren (1) mit wenigstens einer diese fest umspannenden Fixierschelle (2) und einer das Rohr (1) mit einem vorgegebenen Toleranzspalt (10) umgebenden Stützschelle (3) welche an einer Wand (7) befestigbar ist und mit ihrer einen als Stützfläche (5) ausgebildeten Stirnseite gegen eine axial gegenüberliegende, als Trägerfläche (6) ausgebildete Stirnseite der Fixierschelle (2) anliegt und über die Fixierschelle (2) das Rohr (1) trägt, wobei das Material wenigstens im Bereich der Stützund/oder der Tragfläche (5,6) schalldämmende Eigenschaften aufweist und gummielastisch ist, wobei die Fixierschelle (2) und die Stützschelle (3) jeweils aus einem steifen Schellenelement (21,31) und einem Elastomerelement (4,4') besteht, **dadurch gekennzeichnet, dass** die Stützfläche (5) des einen Elastomerelements (4,4') in einem Winkel, vorzugsweise in einem spitzen Winkel zur Wand des Rohres (1) ausgebildet ist, wobei die Tragfläche (6) des anderen Elastomerelemens (4,4') einen halbkreisförmigen Querschnitt aufweist und die Berührung zwischen dem Elastomerelement (4') der Fixierschelle (2) und dem Elastomerelement (4) der Stützschelle (3) annähernd eine Linienberührung ist, so dass im montierten Zustand die Fixierschelle (2) selbstzentrierend an der Stützschelle (3) anliegt.

2. Vorrichtung nach Anspruch 1, **dadurch gekennzeichnet, dass** die Stützschelle (3) über ein Befestigungselement (8) an der Wand (7) befestigbar ist.

3. Vorrichtung nach Anspruch 1 und 2, **dadurch gekennzeichnet, dass** ein Elastomerelement (4,4') der Fixierschelle (2) auf seiner dem Rohr (1) zugewandten Seite mit einer Teilfläche des Elastomerelementes (4,4') an der Wandung des Rohres anliegt.

4. Verwendung einer Vorrichtung zur Körperschallentkopplung zwischen einem Rohr (1) und einer Wand (7) nach Anspruch 1 bis 3 **dadurch gekennzeichnet, dass** der Körperschall entlang des befestigten Rohres (1) im Bereich der Fixierschelle (2) und der Stützschelle (3) durch das komprimierte Elastomerelement (4,4') und der reduzierten Übertragungsfläche entkoppelt und gedämpft ist.

## Claims

1. Device for the fastening of pipes (1) with at least one fastening pipe clip (2) firmly encircling the pipe and a supporting pipe clip (3) encircling the pipe (1) with a predetermined tolerance gap (10), which can be attached to a wall (7) and which is in contact with its end, shaped as a supporting surface (5), with an axially opposing end of the fastening pipe clip (2), shaped as a load bearing surface (6), and which holds the pipe (1) by the fastening pipe clip (2) whereby the material has acoustically insulating properties at least in the region of the supporting and/or load bearing surface (5,6) and is rubber-like elastic whereby the fastening pipe clip (2), and the supporting pipe clip (3) each consist of a rigid clip element (21,31) and an elastomer element (4,4'), **characterised in that** the supporting surface (5) of one elastomer element (4,4') is shaped with an angle, preferably an acute angle, to the wall of the pipe (1) whereby the load bearing surface (6) of the other elastomer element (4,4') has a semicircular cross-section and the contact between the elastomer element (4') of the fastening pipe clip (2) and the elastomer element (4) of the supporting pipe clip (3) is approximately linear, so that the fastening pipe clip (2) lies self-centring against the supporting pipe clip (3) when fitted.

2. Device according to claim 1, **characterised in that** the supporting pipe clip (3) can be fastened by a fastening element (8) to the wall (7).

3. Device according to claims 1 and 2, **characterised in that** the elastomer element (4,4') of the fastening pipe clip (2) is adjacent to the side facing the pipe (1) with a part of the surface of the elastomer element (4,4') at the wall of the pipe.

4. Use of a device to decouple sound conducted through solids between a pipe (1) and a wall (7) according to claims 1 to 3, **characterised in that** the sound conducted along the fastened pipe (1) is decoupled and suppressed in the region of the fastening pipe clip (2) and the supporting pipe clip (3) by the compressed elastomer element (4,4') and the reduced transfer surface.

## Revendications

1. Dispositif de fixation de tuyauterie (1) composé au minimum d'un collier de fixation (2) qui serre le tuyauterie et d'un collier servant d'appui (3) qui entoure le tuyauterie (1) en laissant un espace de tolérance donné, ce dernier collier présentant les caractéristiques suivantes et il peut être fixé au mur (7), il épouse, avec l'une de ses extrémités conçue comme une surface d'appui (5), une extrémité du collier de fixation (2) axialement opposée à cette surface d'appui et conçue comme une surface portante (6) et il supporte le tuyauterie (1) par l'intermédiaire du collier de fixation (2) et le matériau utilisé, au moins pour ce qui concerne la partie comprenant la surface d'appui et/ou la surface portante (5,6), présentant des qualités insonorisantes et une élasticité entropique, et le collier de fixation (2) et le collier d'appui (3) étant chacun formés d'un élément rigide (21,31) et d'un élément en matériau élastomère (4,4'), **caractérisé en ce que** la surface d'appui (5) de l'un des éléments en matériau élastomère (4,4') forme un angle avec la paroi du tuyauterie (1), de préférence un angle aigu et la surface portante (6) de l'autre élément en élastomère (4,4') présentant un profil circulaire et la surface de contact entre l'élément en élastomère (4') du collier de fixation (2) et l'élément en élastomère (4) du collier d'appui (3) ayant à peu près la forme d'une ligne, de sorte que, une fois le système monté, le collier de fixation (2) soit automatiquement centré et s'adapte exactement à la forme du collier d'appui (3).

2. Dispositif selon la revendication 1, **caractérisé en ce que** le collier servant d'appui (3) peut être fixé au mur (7) au moyen d'un élément de fixation (8).

3. Dispositif selon les revendications 1 et 2 , **caractérisé en ce qu' un** des éléments en élastomère (4, 4') du collier de fixation (2) présente la caractéristique suivante et une partie de la surface de l'un des éléments en élastomère (4,4') située face au tuyauterie (1) est solidaire avec la paroi du tuyauterie (1).

4. Utilisation d'un dispositif destiné à éviter la transmission des bruits solidiens du tuyauterie (1) vers le mur (7) selon les revendications 1 à 3, **caractérisé en ce que** l'élément en élastomère comprimé (4,4') et la surface réduite de transmission des bruits permettent, au niveau du collier de fixation (2) et du collier d'appui (3), une rupture de la transmission des bruits solidiens existant le long du tuyauterie (1) fixé et ainsi une atténuation acoustique.
